(19) Europäisches Patentamt
European Patent Office
Office européen des brevets

(11) **EP 4 516 384 A1**

(12) **EUROPEAN PATENT APPLICATION**
published in accordance with Art. 153(4) EPC

(43) Date of publication:
05.03.2025 Bulletin 2025/10

(21) Application number: 23811376.5

(22) Date of filing: 20.02.2023

(51) International Patent Classification (IPC):
*B01D 53/86* (2006.01)   *B01D 53/90* (2006.01)
*F01N 3/02* (2006.01)   *F01N 3/08* (2006.01)
*B01J 21/06* (2006.01)

(52) Cooperative Patent Classification (CPC):
B01D 53/86; B01D 53/90; B01J 21/06; F01N 3/02;
F01N 3/08

(86) International application number:
PCT/JP2023/006075

(87) International publication number:
WO 2023/228495 (30.11.2023 Gazette 2023/48)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 26.05.2022 JP 2022086027

(71) Applicant: Mitsubishi Heavy Industries, Ltd.
Tokyo 100-8332 (JP)

(72) Inventors:
• TODAKA, Shimpei
Tokyo 100-8332 (JP)
• KAKO, Hiroshi
Tokyo 100-8332 (JP)

(74) Representative: Studio Torta S.p.A.
Via Viotti, 9
10121 Torino (IT)

(54) **DENITRATION DEVICE**

(57) A NOx removal device (10) includes: an ammonia injection part (11) configured to inject ammonia to the flue gas flowing through a duct (3); a mixer (12) provided downstream of the ammonia injection part (11) and configured to mix the flue gas and ammonia; and a NOx removal catalyst (13) provided downstream of the mixer (12) and over the entire region of a flow path cross section of the duct (3) and configured to provide a resistance against a flow of a mixture fluid in which the flue gas and the reducing agent are mixed. The ammonia injection part (11) has an ammonia pipe (11a) and injecting nozzles (11b) provided in the ammonia pipe (11a) and configured to inject ammonia into the duct (3). The distance A from the ammonia injection part (11) to the mixer (12) is 10 times or greater and 30 times or less the outer diameter d of the ammonia pipe (11a). The distance B from the mixer (12) to the NOx removal catalyst (13) is longer than the distance A from the ammonia injection part (11) to the mixer (12).

FIG. 2

**Description**

[Technical Field]

The present disclosure relates to a NOx removal device.

[Background Art]

In heat recovery steam generators (HRSG), a flue gas discharged from a gas turbine or the like passes through in a duct, heat exchange between the flue gas and water or steam in heat transfer tubes is performed to generate steam. A plurality of heat exchangers having a number of heat transfer tubes through which water or steam flows, a NOx removal device that removes nitrogen oxides (NOx) in the flue gas, and the like are installed inside the duct of a heat recovery steam generator.

In NOx removal devices, for example, a reducing agent (for example, ammonia or urea water) that serves to reduce nitrogen oxides is injected from an injecting nozzle to a flue gas flowing through a duct, the flue gas containing the injected reducing agent passes through a reaction device (for example, a NOx removal catalyst), and thereby nitrogen oxides in the flue gas are removed. In such a NOx removal device, to mix the flue gas with a reducing agent and equalize the concentration of the reducing agent in the flue gas, a mixing device that mixes the flue gas with the reducing agent may be installed downstream of the injecting nozzle and upstream of the reaction device (for example, Patent Literature 1). Patent Literature 1 discloses a NOx removal device in which a mixing device having a plurality of triangular plates is provided upstream of the reaction device.

[Citation List]

[Patent Literature]

[PTL 1]
Japanese Utility Model Application Publication No. H6-31826

[Summary of Invention]

[Technical Problem]

In the NOx removal device disclosed in Patent Literature 1, the flue gas containing the injected reducing agent passes through a mixing device, thereby a gas vortex occurs downstream of the mixing device, and due to this vortex, the flue gas and the reducing agent are mixed with each other. The fluid in which the flue gas and the reducing agent are mixed with each other passes through the reaction device arranged downstream of the mixing device, and thereby nitrogen oxides therein are removed.

In a state where the gas vortex generated in the mixing device is not sufficiently attenuated, the mixture fluid of the flue gas and the reducing agent that has passed through the mixing device and then flows through a duct has unevenness in flow velocities at respective positions in a flow path cross section. If the mixture fluid of the flue gas and the reducing agent flows into the reaction device in such a state, this will cause unevenness in the amount of the mixture fluid flowing into respective positions in the reaction device. If unevenness occurs in the amount of the mixture fluid flowing into the reaction device, this may reduce the NOx removal efficiency of the reaction device.

Further, if the concentration of the reducing agent is not equalized when the flue gas containing the injected reducing agent flows into the mixing device, this may prevent suitable mixture of the flue gas with the reducing agent in the mixing device. If suitable mixture of the flue gas with the reducing agent is prevented, this may reduce the NOx removal efficiency of the reaction device.

The present disclosure has been made in view of such circumstances and intends to provide a NOx removal device that can improve NOx removal efficiency.

[Solution to Problem]

To solve the above problem, the NOx removal device of the present disclosure employs the following solutions.

A NOx removal device according to one aspect of the present disclosure is a NOx removal device provided inside a duct through which a flue gas flows in a predetermined direction, and the NOx removal device includes: an injection part configured to inject a reducing agent to the flue gas flowing through the duct, the reducing agent serving to reduce nitrogen oxide contained in the flue gas; a mixing part provided downstream of the injection part and configured to form a vortex about a center axis extending in the predetermined direction to mix the flue gas flowing through the duct and the reducing agent with each other; and a flow-straightening part provided downstream of the mixing part and over the entire region of a flow path cross section of the duct and configured to provide a resistance against a flow of a mixture fluid, the flue gas and the reducing agent being mixed in the mixture fluid. The injection part has a reducing agent pipe extending in an intersecting direction that is a direction intersecting the predetermined direction, the reducing agent flowing through inside the reducing agent pipe, and a nozzle provided in a side face of the reducing agent pipe and configured to inject the reducing agent into the duct, the distance from the injection part to the mixing part is 10 times or greater and 30 times or less of the outer diameter of the reducing agent pipe, and the distance from the mixing part to the flow-straightening part is longer than the distance from the injection part to the mixing part.

[Advantageous Effects of Invention]

According to the present disclosure, NOx removal efficiency can be improved.

[Brief Description of Drawings]

[Fig. 1]

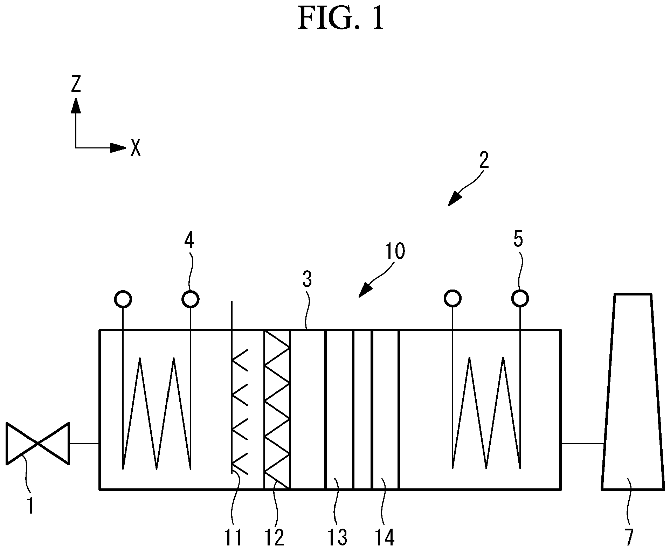

Fig. 1 is a general configuration diagram illustrating a heat recovery steam generator according to an embodiment of the present disclosure.
[Fig. 2]

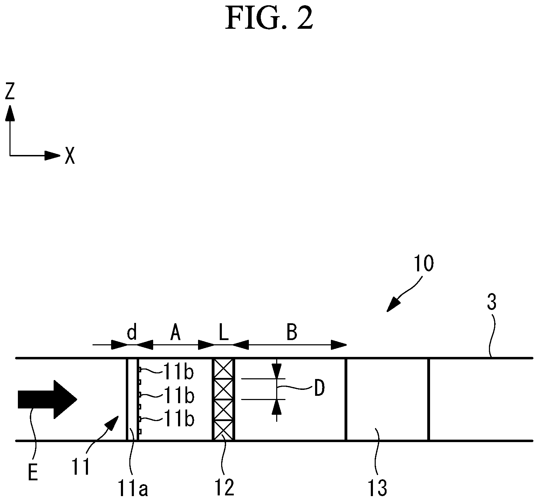

Fig. 2 is a general configuration diagram illustrating a NOx removal device according to the embodiment of the present disclosure.
[Fig. 3]

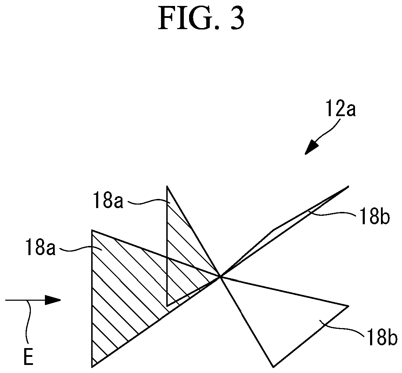

Fig. 3 is a schematic perspective view illustrating a cell of a mixer according to the embodiment of the present disclosure.
[Fig. 4]

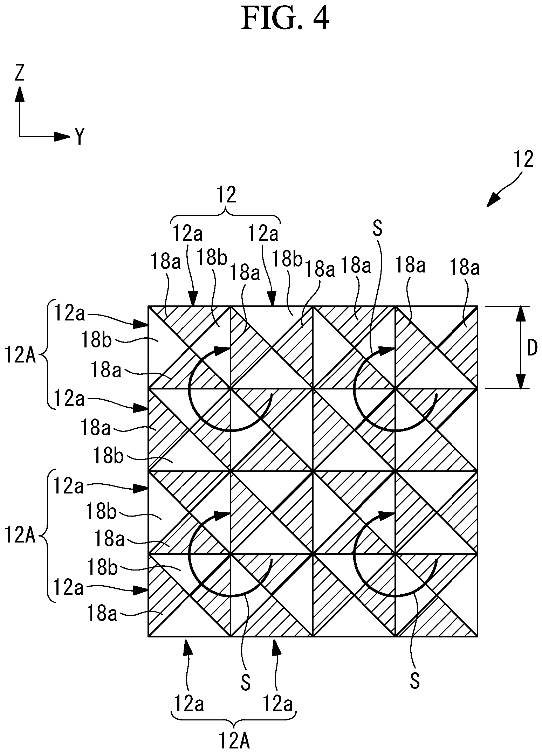

Fig. 4 is a schematic side view illustrating the mixer according to the embodiment of the present disclosure.
[Fig. 5]

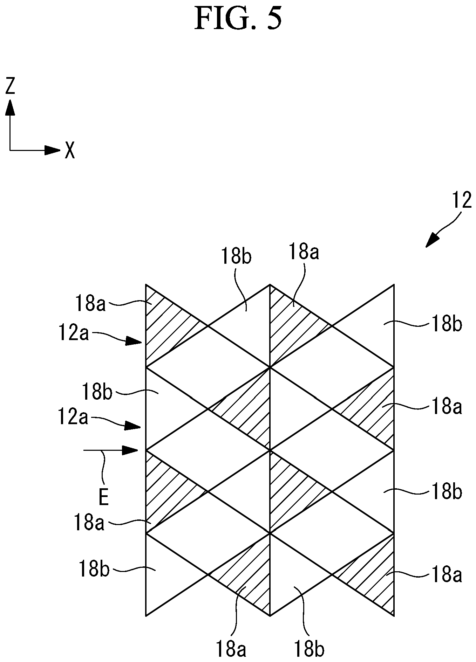

Fig. 5 is a schematic front view illustrating the mixer according to the embodiment of the present disclosure.
[Fig. 6]

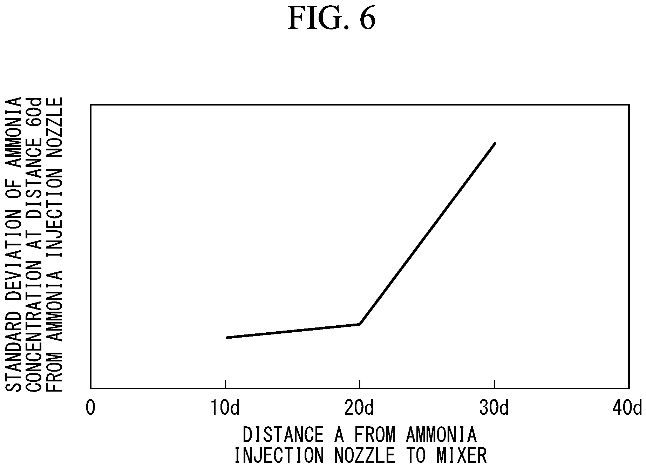

Fig. 6 is a graph illustrating a relationship between the ammonia concentration and the distance from an ammonia injection part to the mixer.
[Fig. 7]

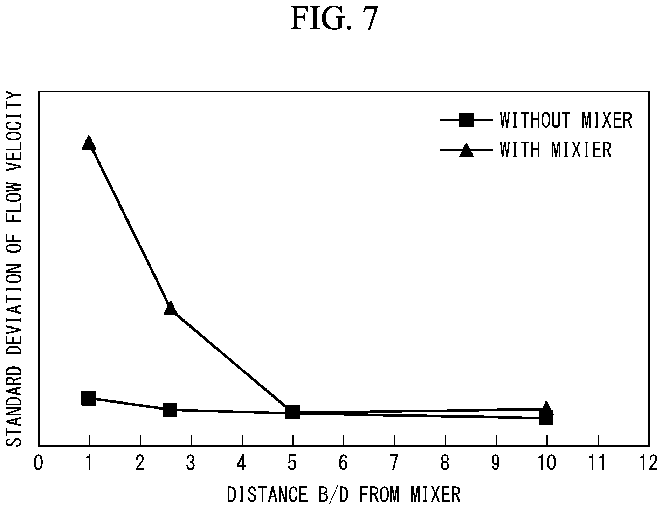

Fig. 7 is a graph illustrating a relationship between the standard deviation of flow velocities of a mixture fluid and the distance from the mixer to a NOx removal catalyst.
[Fig. 8]

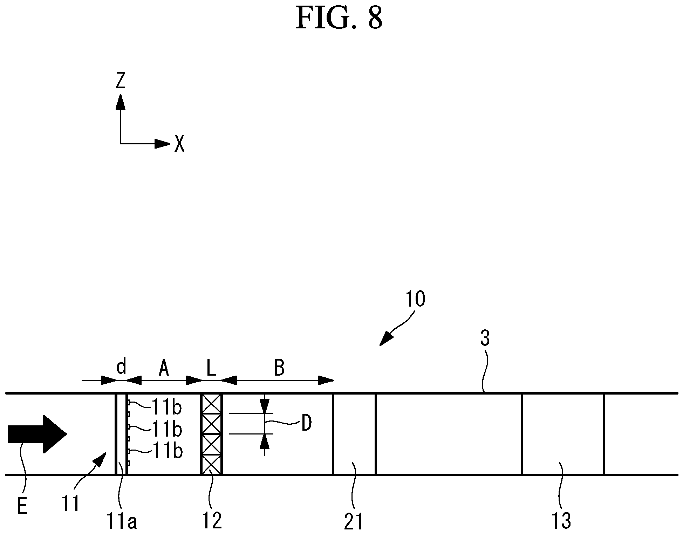

Fig. 8 is a general configuration diagram illustrating a NOx removal device according to a modified example for the embodiment of the present disclosure.

[Description of Embodiments]

A NOx removal device according to the embodiment of the present disclosure will be described below with reference to Fig. 1 to Fig. 8. In the following description and drawings, the vertical direction is referred to as a Z-axis direction, a direction out of the horizontal direction in which the flue gas flows is referred to as an X-axis direction, and the direction orthogonal to the X-axis direction and the Z-axis direction is referred to as a Y-axis direction. Further, the flow direction of the flue gas is indicated by the arrow E in Fig. 2, Fig. 3, Fig. 5, and Fig. 8.

First, a heat recovery steam generator 2 according to the present embodiment will be described with reference to Fig. 1.

As illustrated in Fig. 1, the heat recovery steam generator 2 according to the present embodiment is a horizontal type heat recovery steam generator in which the flue gas flows in the X-axis direction (predetermined direction). In the present embodiment, the X-axis direction, which is the direction in which the flue gas flows, is the horizontal direction.

The heat recovery steam generator 2 according to the present embodiment includes a duct 3 that is provided extending in the X-axis direction and inside which the flue gas flows through, a NOx removal device 10 that is provided inside the duct 3 and removes nitrogen oxides (NOx) contained in the flue gas, and a first heat exchange unit 4 and a second heat exchange unit 5 provided inside the duct 3.

The first heat exchange unit 4 and the second heat exchange unit 5 have a plurality of heat transfer tubes (not illustrated) provided extending in the vertical direction (Z-axis direction) so as to intersect with the flue gas flow direction. The first heat exchange unit 4 and the second heat exchange unit 5 recover heat of the flue gas via heat exchange between a heat medium (for example, water or steam) flowing through inside the heat transfer tubes and the flue gas.

The first heat exchange unit 4 is provided upstream of the NOx removal device 10. For example, the first heat exchange unit 4 may be a superheater that superheats the heat medium flowing through inside the heat transfer tubes. The second heat exchange unit 5 is provided downstream of the NOx removal device 10. For example, the second heat exchange unit 5 may be evaporator that evaporates the heat medium flowing through inside the heat transfer tubes.

A high-temperature combustion flue gas (flue gas) discharged from a combustion engine 1 is introduced into the duct 3 from the inlet of the duct 3, passes through the first heat exchange unit 4, the NOx removal device 10, and the second heat exchange unit 5 in order, and is then discharged from a stack 7 via the outlet of the duct 3.

Next, the NOx removal device 10 will be described in detail with reference to Fig. 1 to Fig. 5.

The NOx removal device 10 supplies a reducing agent such as ammonia or urea water that serves to reduce nitrogen oxides to the flue gas flowing through the duct 3, promotes the reaction between nitrogen oxides (NOx) and the reducing agent in the flue gas supplied with the reducing agent by using a catalyst action of the NOx removal catalyst 13, and thereby remove or reduce nitrogen oxides in the flue gas. In the following description, an example using an ammonia gas as the reducing agent will be described. Note that the reducing agent according to the present disclosure is not limited to an ammonia gas. For example, ammonia in a liquid state may be used, or reducing agents other than ammonia may be used.

As illustrated in Fig. 1 and Fig. 2, the NOx removal device 10 includes an ammonia injection part (injection part) 11, a mixer 12, a NOx removal catalyst (flow-straightening part) 13, and an ammonia decomposition catalyst 14 inside the duct 3 that are arranged in this order from the upstream of the flue gas flow.

The ammonia injection part 11 has an ammonia pipe (reducing agent pipe) 11a extending in the Z-axis direction and a plurality of injection nozzles (nozzle) 11b provided on the side face of the ammonia pipe 11a. The ammonia injection part 11 injects an ammonia gas along the X-axis direction into the duct 3 from the plurality of injection nozzles 11b and thereby injects ammonia to the flue gas flowing through the duct 3.

The ammonia pipe 11a has a circular tube shape. In the ammonia pipe 11a, ammonia flows through inside thereof. The outer diameter d of the ammonia pipe 11a is a predetermined length.

The plurality of injection nozzles 11b are arranged aligned at a predetermined interval along the extending direction of the ammonia pipe 11a (that is, the Z-axis direction). Each of the injection nozzles 11b may be a circular hole formed in the side face of the ammonia pipe 11a. An ammonia gas is injected from the injection nozzles 11b at a predetermined injection pressure. Further, the diameter of the injection hole of each injection nozzle 11b is, for example, 3 mm to 6 mm. The injection nozzle 11b injects an ammonia gas in a conical shape. Note that the diameter of the injection hole or the injection manner of the injection nozzle 11b described above is an example and is not limited thereto.

The NOx removal catalyst 13 is arranged so as to cover substantially the entire region of the flow path cross section of the duct 3. The NOx removal catalyst 13 has, for example, a rectangular frame part (not illustrated) having a rectangular cylindrical shape and a plurality of catalysts (not illustrated) provided inside the rectangular frame part. As the shape of the catalyst, a honeycomb shape or a corrugated board shape where the flue gas can pass in the X-axis direction are illustrated as an example, but the shape is not limited thereto. The catalyst facilitates a reduction reaction of nitrogen oxides (NOx) contained in the flue gas (combustion gas) passing through inside thereof to remove at least a part of the NOx. The component of the catalyst is, for example, titanium oxide based.

The ammonia decomposition catalyst 14 is arranged so as to cover substantially the entire region of the flow path cross section of the duct 3. The ammonia decomposition catalyst 14 decomposes ammonia contained in the flue gas and thereby removes ammonia out of the flue gas. In the present embodiment, since the ammonia decomposition catalyst 14 is provided downstream of the NOx removal catalyst 13, ammonia in the flue gas that is left unreacted with the NOx removal catalyst 13 can be decomposed by the ammonia decomposition catalyst 14.

The mixer 12 is arranged so as to cover substantially the entire region of the flow path cross section of the duct 3. As illustrated in Fig. 3 and Fig. 4, the mixer 12 includes a plurality of mixing parts 12A that form swirl flows S each swirling about the center axis extending in the X-axis direction. Further, each of the mixing parts 12A has a plurality of (in the present embodiment, four, as an example) cells 12a. That is, the mixing part 12A combines a plurality of cells 12a to form one swirl flow (vortex) S. The swirl flow S is formed at substantially the center of the mixing part 12A.

The flue gas passing through the mixer 12 (in details, the flue gas with ammonia injected) flows as a plurality of swirl flows S in the space downstream of the mixer 12. In such a way, the mixer 12 forms the swirl flows S to mix the flue gas flowing through the duct and ammonia.

For the plurality of mixing parts 12A, as illustrated in Fig. 4, a plurality of (in the present embodiment, two, as an example) mixing parts are arranged aligned in the Z-axis direction, and a plurality of (in the present embodiment, two, as an example) mixing parts are arranged aligned in the Y-axis direction. Further, for the plurality of mixing parts 12A, as illustrated in Fig. 5, a plurality of (in the present embodiment, two, as an example) mixing parts are also arranged aligned in the X-axis direction. That is, the mixing part 12A is arranged in two sets in the X-axis direction. Note that the number of mixing parts 12A is an example and is not limited to the number in the present embodiment.

The mixing part 12A has a plurality of (in the present embodiment, two, as an example) cells 12a arranged aligned in the Z-axis direction (first intersecting direction) and the Y-axis direction (second intersecting direction). The cells 12a have a regular shape.

Further, for the plurality of cells 12a, as illustrated in Fig. 4, a plurality of cells (in the present embodiment, two, as an example) are arranged aligned in the Z-axis direction and a plurality of cells (in the present embodiment, two, as an example) are arranged aligned in the Y-axis direction with respect to one mixing part 12A. The cells 12a adjacent in the Z-axis direction and the Y-axis direction are arranged so as to have orientations rotated relative to each other by 90 degrees about the central axis extending in the X-axis direction. As illustrated in Fig. 2, the length in the Z-axis direction of the cell 12a is a length D. Further, the length in the X-axis direction of the cell 12a is a length L. The size of the cell 12a influences the size of a vortex formed downstream of the mixer 12. That is, the cell 12a determines the size of the formed vortex.

As illustrated in Fig. 3, the cell 12a has four triangular and plate-like plate parts 18. The four plate parts 18 have the same shape. The four plate parts 18 have two upstream plate parts 18a arranged upstream of the center point in the X-axis direction of the cell 12a and two downstream plate parts 18b arranged downstream of the center point.

The two upstream plate parts 18a are arranged so as to form two opposing faces of a virtual quadrangular pyramid whose vertex is arranged downstream. The two upstream plate parts 18a are arranged so that the vertexes thereof arranged most-downstream are in contact with each other.

The two downstream plate parts 18b are arranged so as to form two opposing faces of a virtual quadrangular pyramid whose vertex is arranged upstream. The two downstream plate parts 18b are arranged so that the vertexes thereof arranged most-upstream are in contact with each other.

The most-downstream arranged vertex of the upstream plate part 18a and the most-upstream arranged vertex of the downstream plate part 18b are in contact with each other. Further, the upstream plate part 18a and the downstream plate part 18b are arranged so as to have orientations rotated relative to each other by 90 degrees about the central axis extending in the X-axis direction.

Note that the structure of the mixer 12 is not limited to the structure described above. The mixer 12 may be of any structure in which regular shapes that cause a swirl flow in combination of a plurality of flat faces or curved faces are aligned and arranged.

Further, the shape of each plate part 18 is not limited to a triangular shape and may be, for example, a trapezoidal shape. In the case of a trapezoidal shape, the upstream plate part 18a is arranged so that the shorter edge (the shorter of a pair of parallel edges) is located downstream, and the downstream plate part 18b is arranged so that the shorter edge is located upstream. Further, the shorter edges (the shorter of a pair of parallel edges) of two upstream plate parts 18a and the shorter edges of two downstream plate parts 18b are connected so as to form a square. That is, a square plate part to which all the shorter edges of four plate parts 18 are connected is provided.

Next, the arrangement of each part of the NOx removal device 10 will be described.

As illustrated in Fig. 2, the distance B from the mixer 12 to the NOx removal catalyst 13 is longer than the distance A from the ammonia injection part 11 to the mixer 12. The distance B is the distance from the downstream end of the mixer 12 to the upstream end of the NOx removal catalyst 13. Further, the distance A is the distance from the downstream end of the ammonia injection part 11 to the upstream end of the mixer 12.

Further, the distance A from the ammonia injection part 11 (in detail, the downstream end of the ammonia pipe 11a) to the mixer 12 is a length of 10 times or greater and 30 times or less of the outer diameter d of the ammonia pipe 11a. That is, Equation (1) below is established.

$$10d \leq A \leq 30d \ \dots \ (1)$$

Further, the distance B from the mixer 12 to the NOx removal catalyst 13 is longer than a length of five times the length D in the Z-axis direction of the cell 12a.

That is, Equation (2) below is established. Note that, in the present embodiment, since the length in the Y-axis direction of the cell 12a and the length in the Z-axis direction of the cell 12a are the same, the length in the Y-axis direction of the cell 12a may be the length D.

$$B/D > 5 \ \dots \ (2)$$

According to the present embodiment, the following effects and advantages are achieved.

A fluid that has passed through the mixer 12 (a mixture fluid in which the flue gas and ammonia are mixed) forms a swirl flow in a space downstream of the mixer 12. Therefore, the flue gas and the reducing agent are better mixed with each other in the space from the mixer 12 to the NOx removal catalyst 13 in which a swirl flow is formed than in the space from the ammonia injection part 11 to the mixer 12. In the present embodiment, the distance B from the mixer 12 to the NOx removal catalyst 13 is longer than the distance A from the ammonia injection part 11 to the mixer 12. Accordingly, since the length of the space from the mixer 12 to the NOx removal catalyst 13 can be longer, the flue gas and ammonia can be suitably mixed with each other. Therefore, since a NOx removal reaction suitably occurs in the NOx removal catalyst 13, the NOx removal efficiency can be improved.

The effect of improvement in NOx removal efficiency will be described in detail with reference to the graph of Fig. 6. The vertical axis of Fig. 6 represents the standard deviation of ammonia concentrations at a position spaced away from the ammonia injection part 11 by 60d (the length of 60 times the outer diameter length d of the ammonia pipe 11a), and the horizontal axis of Fig. 6 represents the distance A from the ammonia injection part 11 to the mixer 12 as a length based on the outer diameter d of the ammonia pipe 11a. Further, Fig. 6 illustrates a case where the distance B from the mixer 12 to the NOx removal catalyst 13 is 30d.

In Fig. 6, when the distance A is smaller than 30d, a smaller value of the distance A results in a smaller standard deviation of ammonia concentrations. That is, a smaller value of the distance A results in a smaller unevenness in the ammonia concentrations, and the mixture is facilitated. In particular, it is determined that the standard deviation decreases sharply in a range of the distance A from 30d to 20d.

In such a way, it can be understood also from the graph of Fig. 6 that, because the distance B from the mixer 12 to the NOx removal catalyst 13 is longer than the distance A from the ammonia injection part 11 to the mixer 12, the flue gas and ammonia can be suitably mixed with each other.

In the state where a swirl flow occurs, unevenness occurs in the flow velocities at respective positions in the flow path cross section in the duct. Thus, if the mixture fluid flows into the NOx removal catalyst 13 in a state where the swirl flow is not sufficiently attenuated, the NOx removal efficiency may be reduced.

In the present embodiment, however, the distance B from the mixer 12 to the NOx removal catalyst 13 is five times longer than the length D in the Z-axis direction of the cell 12a. Accordingly, since the distance B from the mixer 12 to the NOx removal catalyst 13 can be longer, the mixture fluid with the swirl flow being sufficiently attenuated (with swirl force being sufficiently weakened) reaches the NOx removal catalyst 13. Therefore, the mixture fluid can be caused to flow into the NOx removal catalyst 13 in a state where unevenness in flow velocities at respective positions in the flow path cross section of the duct 3 is suppressed. Thus, a mixture fluid in an equalized state can be supplied to the NOx removal catalyst 13. Thus, since a NOx removal reaction suitably occurs in the NOx removal catalyst 13, the NOx removal efficiency can be improved.

The effect of improvement in NOx removal efficiency will be described in detail with reference to the graph of Fig. 7. The vertical axis of Fig. 7 represents the standard deviation of flow velocities of the mixture fluid, and the horizontal axis of Fig. 7 represents the value of B/D.

In Fig. 7, when B/D is smaller than 5, a smaller value of B/D results in a larger standard deviation of flow velocities of the mixture fluid. In contrast, when B/D is larger than 5, the standard deviation of flow velocities of the mixture fluid is at the same degree as that when the mixer 12 is not provided. From this fact, it can be determined that, when B/D is larger than 5, the swirl flow formed in the mixer 12 is attenuated to the same degree as that when the mixer 12 is not provided.

In such a way, it can be understood also from the graph of Fig. 7 that, because the distance B is five times longer than the length D of the cell 12a, the swirl flow can be sufficiently attenuated, and a mixture fluid in an equalized state can be supplied to the NOx removal catalyst 13.

Further, in the present embodiment, the distance A from the ammonia injection part 11 to the mixer 12 is 10 times or greater of the outer diameter d of the ammonia pipe 11a. Accordingly, since ammonia injected from the injection nozzle 11b flows into the mixer 12 in a suitably diffused state, the flue gas and ammonia can be suitably mixed with each other in the mixer 12. Therefore, the NOx removal efficiency can be improved. Further, in the present embodiment, the distance A from the ammonia injection part 11 to the mixer 12 is 30 times or less of the outer diameter d of the ammonia pipe 11a. Accordingly, the entire length of the duct 3 can be shorter. Therefore, the NOx removal device 10 can be reduced in size. As described above, in the present embodiment, the mixing performance in the mixer 12 can be improved, and the NOx removal device 10 can be reduced in size.

[Modified Example 1]

Next, a modified example for the present embodiment will be described with reference to Fig. 8.

Although the example in which no large resistive element is provided between the mixer 12 and the NOx removal catalyst 13 has been described in the above embodiment, the present disclosure is not limited thereto. For example, as illustrated in Fig. 8, a high-pressure heat exchange unit (heat exchanger) 21 that is a resistive element may be provided between the mixer 12 and the NOx removal catalyst 13. In the present modified example, the NOx removal catalyst 13 is provided downstream of the high-pressure heat exchange unit 21.

The high-pressure heat exchange unit 21 has heat transfer tubes (not illustrated) inside which a heat medium flows through and causes heat exchange between the heat medium flowing through inside the heat transfer tubes and the flue gas flowing through outside the heat transfer tubes in the same manner as the first heat exchange unit 4 and the second heat exchange unit 5. In such structure, the distance between the mixer 12 and the high-pressure heat exchange unit 21 is the distance B. That is, the distance from the mixer 12 to the high-pressure heat exchange unit 21 (distance B) is set longer than the length of five times the length D in the Z-axis direction of the cell 12a of the mixer 12.

As described above, the distance B of the present embodiment may be any distance between the mixer 12 and a resistive element (for example, the NOx removal catalyst 13 or the high-pressure heat exchange unit 21) arranged downstream of the mixer 12 and most-upstream. The resistive element is an object arranged so as to cover substantially the entire region of the flow path sectional area of the duct 3 and providing a resistance against the flue gas flowing through the duct 3 (in detail, the flue gas with ammonia injected). Specifically, the resistive element is an object that significantly attenuates a swirl flow occurring in the mixer 12. The resistive element may be, for example, an ammonia decomposition catalyst that decomposes ammonia or a CO decomposition catalyst that decomposes carbon monoxide other than the NOx removal catalyst 13 or the high-pressure heat exchange unit 21 described in the above embodiments.

According to the present modified example, the following effects and advantages are achieved.

In the present embodiment, since a mixture fluid flows into the high-pressure heat exchange unit 21 in a state where unevenness is suppressed, a state where unevenness in flow velocities of the mixture fluid is sufficiently suppressed can also be obtained downstream of the high-pressure heat exchange unit 21. Therefore, a mixture fluid in an equalized state can be caused to flow also into the NOx removal catalyst 13 arranged downstream of the high-pressure heat exchange unit 21. Therefore, since a NOx removal reaction suitably occurs in the NOx removal catalyst 13, the NOx removal efficiency can be improved.

Note that the present disclosure is not limited to each embodiment described above, and modification can be made as appropriate within the scope not departing from the spirit thereof.

For example, although the example in which two (two sets of) mixing parts 12A (cells 12a) are provided in the X-axis direction has been described in the above embodiment, the present disclosure is not limited thereto. For example, three or more (three or more sets of) mixing parts 12A (cells 12a) may be provided in the X-axis direction, or only one (one set of) mixing part 12A (cell 12a) may be provided in the X-axis direction.

Further, although the example in which the NOx removal device is provided inside the horizontal type duct through which the flue gas flows in the horizontal direction has been described in the above embodiment, the present disclosure is not limited thereto. For example, the NOx removal device may be provided inside the vertical type duct through which the flue gas flows in the vertical direction.

The NOx removal device described in the embodiment illustrated above is understood as follows, for example.

The NOx removal device according to the first aspect of the present disclosure is a NOx removal device (10) provided inside a duct (3) through which a flue gas flows in a predetermined direction (X-axis direction), and the NOx removal device includes: an injection part (11) configured to inject a reducing agent to the flue gas flowing through the duct, the reducing agent serving to reduce nitrogen oxide contained in the flue gas; a mixing part (12) provided downstream of the injection part and configured to form a vortex about a center axis extending in the predetermined direction to mix the flue gas flowing through the duct and the reducing agent with each other; and a flow-straightening part (13, 21) provided downstream of the mixing part and over the entire region of a flow path cross section of the duct and configured to provide a resistance against a flow of a mixture fluid, the flue gas and the reducing agent being mixed in the mixture fluid. The injection part has a reducing agent pipe extending in an intersecting direction that is a direction intersecting the predetermined direction, the reducing agent flowing through inside the reducing agent pipe, and a nozzle provided in a side face of the reducing agent pipe and configured to inject the reducing agent into the duct, the distance (A) from the injection part to the mixing part is 10 times or greater and 30 times or less of the outer diameter (d) of the reducing agent pipe, and the distance (B) from the mixing part to the flow-straightening part is longer than the distance (A) from the injection part to the mixing part.

A fluid that has passed through the mixing part forms a vortex in a space downstream of the mixing part. Therefore, the flue gas and the reducing agent are better mixed with each other in the space from the mixing part to the flow-straightening part in which a vortex is formed than in the space from the injection part to the mixing part. In the above configuration, the distance from the mixing part to the flow-straightening part is longer than the distance from the injection part to the mixing part. Accordingly, since the length from the mixing part to the flow-straightening part can be longer, the flue gas and the reducing agent can be suitably mixed with each other. Therefore, since a NOx removal reaction suitably occurs in the NOx removal catalyst, the NOx removal efficiency can be improved.

Further, since a gas flows into the flow-straightening part in a state where unevenness is suppressed, a state where unevenness in flow velocities of the mixture fluid is sufficiently suppressed can also be obtained downstream of the flow-straightening part. Therefore, for example, when the flow-straightening part is a heat exchanger or the like and a NOx removal catalyst is provided downstream of the heat exchanger, the state where unevenness in flow velocities of the mixture fluid is sufficiently suppressed is obtained also downstream of the heat exchanger, and this causes the mixture fluid in an equalized state to flow into the NOx removal catalyst. Therefore, since a NOx removal reaction suitably occurs in the NOx removal catalyst, the NOx removal efficiency can be improved.

Further, in the above configuration, the distance from the injection part to the mixing part is 10 times or greater of the outer diameter d of the reducing agent pipe. Accordingly, since a reducing agent injected from the nozzle flows into the mixing part in a suitably diffused state, the flue gas and the reducing agent can be suitably mixed with each other in the mixer. Therefore, the NOx removal efficiency can be improved. Further, in the above configuration, the distance from the injection part to the mixing part is 30 times or less of the outer diameter of the reducing agent pipe. Accordingly, the entire length of the duct can be shorter. Therefore, the NOx removal device can be reduced in size. As described above, in the above configuration, the mixing performance in the mixing part can be improved, and the NOx removal device can be reduced in size.

Further, in the NOx removal device according to the second aspect of the present disclosure, in the above first aspect, the mixing part has a plurality of cells (12a) determining the size of a vortex to be formed, and the distance (B) from the mixing part to the flow-straightening part is longer than a length of five times a length (D) in an intersecting direction of each of the cells, the intersecting direction being a direction intersecting the predetermined direction.

In the above configuration, the distance from the mixing part to the flow-straightening part is five times longer than the length in the intersecting direction of the cell.

Accordingly, since the distance from the mixing part to the flow-straightening part can be longer, the mixture fluid with the vortex formed in the mixing part being sufficiently attenuated reaches the flow-straightening part. Therefore, the mixture fluid can be caused to flow into the flow-straightening part in a state where unevenness in flow velocities at respective positions in the flow path cross section is suppressed. Thus, for example, when the flow-straightening part is a NOx removal catalyst, the mixture fluid in an equalized state flows into the NOx removal catalyst, a NOx removal reaction suitably occurs in the NOx removal catalyst, and therefore the NOx removal efficiency can be improved.

Further, in the NOx removal device according to the third aspect of the present disclosure, in the above first aspect or second aspect, the flow-straightening part has a NOx removal catalyst (13) configured to remove nitrogen oxide contained in the flue gas when the mixture fluid passes through the NOx removal catalyst.

In the above configuration, the mixture fluid can be caused to flow into the NOx removal catalyst in a state where unevenness in flow velocities at respective positions in the flow path cross section is suppressed. Therefore, the mixture fluid in an equalized state flows into the NOx removal catalyst, a NOx removal reaction suitably occurs in the NOx removal catalyst, and therefore the NOx removal efficiency can be improved.

Further, the NOx removal device according to the fourth aspect of the present disclosure, in the above first aspect or second aspect, includes a NOx removal catalyst (13) arranged downstream of the flow-straightening part and configured to remove nitrogen oxide contained in the flue gas when the mixture fluid passes through the NOx removal catalyst, and the flow-straightening part has a heat exchanger (21) comprising a heat transfer tube inside which water or steam flows through and configured to perform heat exchange between water or steam flowing through the heat transfer tube and the flue gas flowing through the duct.

In the above configuration, since the state where unevenness in flow velocities of the mixture fluid is sufficiently suppressed can be obtained also downstream of the flow-straightening part (heat exchanger), this causes the mixture fluid in an equalized state to flow into the NOx removal catalyst. Therefore, since a NOx removal reaction suitably occurs in the NOx removal catalyst, the NOx removal efficiency can be improved.

[Reference Signs List]

| 1 | combustion engine |
| 2 | heat recovery steam generator |
| 3 | duct |
| 4 | first heat exchange unit |
| 5 | second heat exchange unit |
| 7 | stack |
| 10 | NOx removal device |
| 11 | ammonia injection part |
| 11a | ammonia pipe |
| 11b | injection nozzle |
| 12 | mixer |
| 12A | mixing part |
| 12a | cell |
| 13 | NOx removal catalyst |
| 14 | ammonia decomposition catalyst |
| 18 | plate part |
| 18a | upstream plate part |
| 18b | downstream plate part |
| 21 | high-pressure heat exchange unit |

**Claims**

1. A NOx removal device provided inside a duct through which a flue gas flows in a predetermined direction, the NOx removal device comprising:

an injection part configured to inject a reducing agent to the flue gas flowing through the duct, the reducing agent serving to reduce nitrogen oxide contained in the flue gas;
a mixing part provided downstream of the injection part and configured to form a vortex about a center axis extending in the predetermined direction to mix the flue gas flowing through the duct and the reducing agent with each other; and
a flow-straightening part provided downstream of the mixing part and over the entire region of a flow path cross section of the duct and configured to provide a resistance against a flow of a mixture fluid, the flue gas and the reducing agent being mixed in the mixture fluid,
wherein the injection part has a reducing agent pipe extending in an intersecting direction that is a direction intersecting the predetermined direction, the reducing agent flowing through inside the reducing agent pipe, and a nozzle provided in a side face of the reducing agent pipe and configured to inject the reducing agent into the duct,
wherein the distance from the injection part to the mixing part is 10 times or greater and 30 times or less of the outer diameter of the reducing agent pipe, and
wherein the distance from the mixing part to the flow-straightening part is longer than the distance from the injection part to the mixing part.

2. The NOx removal device according to claim 1,

wherein the mixing part has a plurality of cells determining the size of a vortex to be formed, and
wherein the distance from the mixing part to the flow-straightening part is longer than a length of five times a length in an intersecting direction of each of the cells, the intersecting direction being a direction intersecting the predetermined direction.

3. The NOx removal device according to claim 1 or 2, wherein the flow-straightening part has a NOx removal catalyst configured to remove nitrogen oxide contained in the flue gas when the mixture fluid passes through the NOx removal catalyst.

4. The NOx removal device according to claim 1 or 2 further comprising a NOx removal catalyst arranged downstream of the flow-straightening part and configured to remove nitrogen oxide contained in the flue gas when the mixture fluid passes through the NOx removal catalyst,
wherein the flow-straightening part has a heat exchanger comprising a heat transfer tube inside which water or steam flows through and configured to perform heat exchange between water or steam flowing through the heat transfer tube and the flue gas flowing through the duct.

# FIG. 1

# FIG. 2

# FIG. 3

# FIG. 4

# FIG. 5

# FIG. 6

Graph showing STANDARD DEVIATION OF AMMONIA CONCENTRATION AT DISTANCE 60d FROM AMMONIA INJECTION NOZZLE (y-axis) versus DISTANCE A FROM AMMONIA INJECTION NOZZLE TO MIXER (x-axis), with x-axis marked 0, 10d, 20d, 30d, 40d.

# FIG. 7

# FIG. 8

## INTERNATIONAL SEARCH REPORT

| International application No. |
| --- |
| **PCT/JP2023/006075** |

### A.  CLASSIFICATION OF SUBJECT MATTER

*B01D 53/86*(2006.01)i; *B01D 53/90*(2006.01)i; *F01N 3/02*(2006.01)i; *F01N 3/08*(2006.01)i; *B01J 21/06*(2006.01)i
FI:   B01D53/86 222; B01J21/06 A; F01N3/02 101A; F01N3/08 B; B01D53/90 ZAB

According to International Patent Classification (IPC) or to both national classification and IPC

### B.   FIELDS SEARCHED

Minimum documentation searched (classification system followed by classification symbols)
B01D53/34-53/96; F01N3/02; F01N3/08; B01J21/06; F23J3/00-99/00; B01F25/40

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C.   DOCUMENTS CONSIDERED TO BE RELEVANT

| Category* | Citation of document, with indication, where appropriate, of the relevant passages | Relevant to claim No. |
| --- | --- | --- |
| Y | JP 2009-108726 A (MITSUBISHI HEAVY IND LTD) 21 May 2009 (2009-05-21) claims, paragraphs [0032]-[0046], fig. 1-5 | 1-4 |
| Y | JP 2016-203032 A (MITSUBISHI HITACHI POWER SYSTEMS IND CO LTD) 08 December 2016 (2016-12-08) paragraph [0061], fig. 1 | 1-4 |
| Y | JP 58-143826 A (BABCOCK HITACHI KK) 26 August 1983 (1983-08-26) p. 2, lower left column, line 5 to p. 3, upper right column, line 4, fig. 1 | 1-4 |
| Y | JP 10-165769 A (BABCOCK HITACHI KK) 23 June 1998 (1998-06-23) claims, paragraphs [0015]-[0021], fig. 1-3 | 2-4 |
| A | JP 2013-180227 A (MITSUBISHI HEAVY IND LTD) 12 September 2013 (2013-09-12) | 1-4 |
| A | WO 2010/032604 A1 (TOKYO ROKI CO, LTD.) 25 March 2010 (2010-03-25) | 1-4 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 April 2023** | **25 April 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT

Information on patent family members

| | | | International application No. |
|---|---|---|---|
| | | | **PCT/JP2023/006075** |

| Patent document cited in search report | | | Publication date (day/month/year) | Patent family member(s) | | | Publication date (day/month/year) |
|---|---|---|---|---|---|---|---|
| JP | 2009-108726 | A | 21 May 2009 | (Family: none) | | | |
| JP | 2016-203032 | A | 08 December 2016 | (Family: none) | | | |
| JP | 58-143826 | A | 26 August 1983 | (Family: none) | | | |
| JP | 10-165769 | A | 23 June 1998 | (Family: none) | | | |
| JP | 2013-180227 | A | 12 September 2013 | (Family: none) | | | |
| WO | 2010/032604 | A1 | 25 March 2010 | US | 2011/0185710 | A1 | |
| | | | | EP | 2325451 | A1 | |
| | | | | CN | 102137991 | A | |

**EP 4 516 384 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H631826 U